# EUROPÄISCHE PATENTSCHRIFT

(11) **EP 0 633 070 B1**
(45) Veröffentlichungstag und Bekanntmachung des Hinweises auf die Patenterteilung: **18.03.1998**
(21) Anmeldenummer: 94109319.7
(22) Anmeldetag: 16.06.1994
(51) Int. Cl.: B05D 3/06, B05D 1/32, B05D 1/06, B44C 1/04, B41M 1/22, B41M 3/00, B05D 5/06

(54) **Verfahren zum Pulverbeschichten von Werkstücken**
Process for coating objects with powders
Procédé pour revêtir des objets avec des poudres

(30) Priorität: 08.07.1993 DE 4322801
(43) Veröffentlichungstag der Anmeldung: 11.01.1995
(73) Patentinhaber: WAGNER INTERNATIONAL AG, 9450 Altstätten (CH)
(72) Erfinder: Adams, Horst, Dr., D-88149 Nonnenhorn (DE)
(74) Vertreter: Liesegang, Roland, Dr.-Ing.

(56) Entgegenhaltungen:
- DE-A- 2 263 777
- DE-A- 3 429 580

## Beschreibung

Die Erfindung betrifft ein Verfahren zum Pulverbeschichten von Werkstücken nach dem Oberbegriff von Patentanspruch 1.

Ein Verfahren dieser Art ist beispielsweise aus der DE-A-2 263 777 zu entnehmen.

Bei der DE-A-2 263 777 wird das Pulver vor der Laserbehandlung auf das Werkstück aufgebracht und anschließend mit einem Laserstrahl geschmolzen. Bei diesem Beschichtungsverfahren muß die Geschwindigkeit des Pulverstromes bzw. des das Werkstück überstreichenden Laserstrahls relativ gering sein, damit der Laserstrahl die Pulverpartikel zuverlässig schmelzen kann. Die dabei erzeugten, relativ hohen Temperaturen machen die Verwendung des neutralen Gases notwendig. Da der Laserstrahl nur eine begrenzte Breite hat, ist ein derartiges Beschichtungsverfahren nicht nur technisch aufwendig, sondern es ist auch langsam und nur für relativ kleine Flächen geeignet.

Ferner ist bekannt, Werkstücke beispielsweise in elektrostatischen Pulverbeschichtungsanlagen vollständig, homogen (einfarbig) mit Farbpulver zu beschichten und das elektrostatisch am Werkstück haftende Farbpulver anschließend in einem Einbrennofen einzubrennen (DE 34 29 580 A1, GB 1 465 146). Soll nun auf einem Werkstück ein mehrfarbiges Muster ausgebildet werden, so wurde bisher das Werkstück mit einer entsprechenden Maske abgedeckt, das zugeordnete Farbpulver auf den freibleibenden, mit der jeweiligen Farbe zu beschichtenden Oberflächenbereich des Werkstückes aufgebracht und anschließend eingebrannt, wobei das gesamte Werkstück in den Einbrennofen eingefahren wurde. Dieser Vorgang wurde dann für jede weitere Farbe mit entsprechenden Abdeckmasken und Farbpulvern wiederholt, bis das gewünschte Muster aufgebracht war. Neben dem ganz erheblichen Zeitaufwand und Energiebedarf dieses Verfahrens, liegt ein besonderer Nachteil der oben beschriebenen Vorgehensweise darin, daß sich die Beschichtungsqualität in der Regel durch das mehrmalige Einbrennen verschlechtert.

Aus der EP-A-0 480 828 und der EP-A-0 481 869 sind Verfahren zum Pulverbeschichten von Werkstücken bekannt, bei denen ein Gemisch aus Pulver und einem neutralen Gas über eine Düse in einen Laserstrahl injiziert wird, so daß das Pulver entweder zusammen mit dem Laserstrahl auf einem Werkstück auftrifft oder zunächst durch den Laserstrahl hindurchgeht und dann auf dem Werkstück auftrifft. Dabei wird das Pulver durch die Wärmestrahlung des Lasers geschmolzen, und das geschmolzene Pulver lagert sich auf dem Werkstück ab.

Der Erfindung liegt die Aufgabe zugrunde, ein Verfahren zum Pulverbeschichten von Werkstücken zu schaffen, mit dem auf einfache Weise örtlich genau begrenzte Oberflächenbereiche eines Werkstücks beschichtet werden können. Gemäß einer Unteraufgabe der Erfindung soll insbesondere ein Verfahren angegeben werden, mit dem mehrfarbige, flächige Strukturen, wie Bilder oder Muster, durch Pulverbeschichtung auf ein Werkstück aufgebracht werden können, ohne daß das Werkstück mehrmals einem Einbrennvorgang unterzogen werden müßte.

Diese Aufgabe wird erfindungsgemäß durch ein Verfahren nach Patentanspruch 1 gelöst. Vorteilhafte Weiterbildungen der Erfindung sind in den abhängigen Ansprüchen beschrieben.

Bei dem erfindungsgemäßen Verfahren wird das Werkstück zunächst wie gewohnt flächig mit Pulver beschichtet, beispielsweise in einer elektrostatischen Pulverbeschichtungsanlage. Daraufhin wird ein bestimmter gewünschter, begrenzter Oberflächenbereich des Werkstückes mit elektromagnetischer Strahlung, wie IR-Licht oder UV-Licht, bestrahlt, um dem Pulver Energie zuzuführen und einen Vernetzungsvorgang auszulösen, so daß das am Werkstück haftende Pulver in diesem begrenzten Oberflächenbereich geliert und am Werkstück anklebt. Dabei wird die Emissionswellenlänge der Strahlungsquelle genau auf die Absorptionswellenlänge des Pulvers abgestimmt, so daß ein sehr effektiver Energietransfer möglich ist. Wenn das Pulver einmal in die flüssige Phase übergegangen ist, setzen sogenannte Vernetzungsvorgänge ein, d.h. es bilden sich dreidimensionale Molekülnetze, die schließlich den homogenen Pulver-Film bilden, den eine Pulverlackschicht eigentlich darstellt. Das außerhalb des begrenzten Oberflächenbereiches am Werkstück haftende Farbpulver wird, beispielsweise durch Abblasen, entfernt. Anschließend wird das Farbpulver in einem Einbrennofen eingebrannt. Mit dem erfindungsgemäßen Verfahren werden die Herstellung und Anwendung von Abdeckmasken für gewünschte Muster überflüssig. Gleichwohl kann auf einfache und schnelle Weise ein flächiges Muster auf eine Werkstückoberfläche aufgebracht werden.

Um auf die Werkstückoberfläche ein mehrfarbiges Muster oder ein Bild aufzubringen, wird das Werkstück nacheinander mit jeweils einem der Farbpulver beschichtet und innerhalb des der jeweiligen Farbe zugeordneten, begrenzten Oberflächenbereiches mit elektromagnetischer Strahlung bestrahlt. Daraufhin wird das überschüssige Farbpulver außerhalb des zugeordneten Oberflächenbereiches abgeblasen, und die Schritte Beschichten, Bestrahlen und Abblasen des Werkstückes werden für jede weitere Farbe wiederholt, bis das gewünschte Muster oder Bild auf dem Werkstück ausgebildet ist. Anschließend wird das gesamte Farbpulver in einem einzigen Arbeitsschritt eingebrannt. Mit dem erfindungsgemäße Verfahren kann also ein mehrfarbiges Muster oder Bild zunächst insgesamt auf das Werkstück aufgebracht werden, wobei jeweils das Pulver in den einzelnen Bereichen durch die elektromagnetische Bestrahlung geliert, und dann in einem einzigen Arbeitsschritt eingebrannt werden, so daß die anfangs beschichteten Bereiche nicht durch mehrmaliges Einbrennen des Farbpulvers leiden.

Unter Gelieren ist in diesem Zusammenhang zunächst das Schmelzen des Pulvers zu verstehen. Hierzu muß dem Pulver von außen Energie zugeführt werden, da hierbei ein endothermer Vorgang abläuft.

Für das Gelieren oder partielle Vernetzen des Pulvers sind neben IR-Strahlungsquellen beispielsweise auch UV-Strahlungsquellen geeignet. Wesentlich bei der Auswahl der Strahlungsquelle und der eingesetzten elektromagnetischen Strahlung ist, daß die übertragene Energie einen Vernetzungsvorgang im Pulver oder ein Anschmelzen des Pulvers auslösen kann.

Als eine Infrarot-Strahlungsquelle kann beispielsweise ein Infrarotlaser oder ein Nernststift verwendet werden, der den gewünschten, begrenzten Oberflächenbereich überstreicht oder "abscannt" bzw. das gewünschte Muster direkt auf das Werkstück projiziert.

Wenn als Infrarot-Strahlungsquelle ein Infrarotlaser verwendet wird, so kann dieser direkt mit einem Rechner gekoppelt werden, der den Laser oder Laserscanner ansteuert, um ein digitalisiertes Bild direkt auf das Werkstück zu übertragen.

Als Strahlungsquelle zum Angelieren oder partiellen Vernetzen des Pulvers kann auch eine UV-Lichtquelle, wie beispielsweise bei der Stereolithographie zur Erzeugung von 3D-Werkstückmustern aus flüssigem Kunststoff, verwendet werden. Der dabei ablaufende chemische Vernetzungsvorgang ist dem der Pulververnetzung sehr ähnlich.

Mit den zur Zeit realisierbaren Technologien ist bei geeignetem Farbpulver eine elektromagnetische Bestrahlung zum Gelieren des Farbpulvers vorgesehen, bei der die Oberfläche während etwa 5s auf ungefähr 160°C erwärmt wird. Dabei ist die Strahlungsquelle nicht auf einen bestimmten Spektralbereich begrenzt. Wesentlich ist vielmehr, daß die von der Strahlungsquelle ausgehende Strahlung auf den den Vernetzungsvorgang im Pulver auslösenden Absorptionsvorgang im Pulver abgestimmt ist.

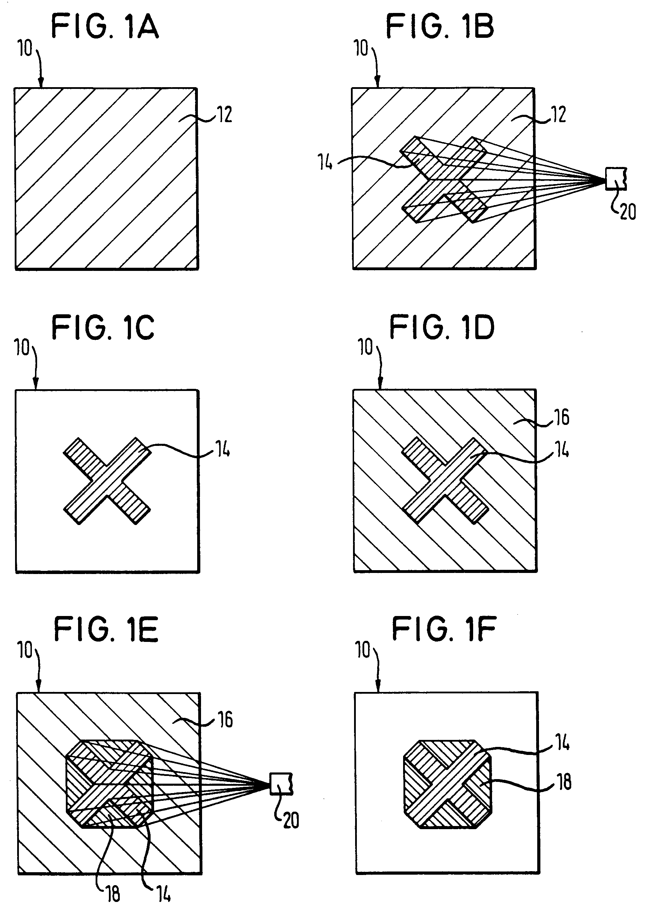

In den **Figuren 1A bis 1F** sind beispielhaft einzelne Verfahrensschritte des erfindungsgemäßen Beschichtungsverfahrens gezeigt, bei dem ein zweifarbiges Muster auf ein Werkstück aufgebracht wird.

Auf die Oberfläche eines Werkstückes 10, von dem in den Fig. 1A bis 1F ein Ausschnitt gezeigt ist, wird mit einem bekannten elektrostatischen Beschichtungsverfahren eine erste Farbpulverschicht 12 flächig aufgebracht (Fig. 1A). Das Farbpulver 12 haftet aufgrund des Potentialunterschiedes zwischen dem geerdeten Werkstück 10 und dem durch einen Hochspannungserzeuger und eine geeignete Elektrodenvorrichtung (nicht gezeigt) aufgeladenen Farbpulver an der Werkstückoberfläche. Unmittelbar nach dem Aufbringen des Farbpulvers 12 wird die Oberfläche des Werkstückes 10 mit einer geeigneten Strahlungsquelle 20, beispielsweise einem IR-Laser, innerhalb eines abgegrenzten Oberflächenbereiches 14 bestrahlt, so daß das Pulver durch die mit der Strahlung übertragene Energie geliert. Dies bewirkt, daß das Pulver in dem bestrahlten Oberflächenbereich 14 nicht nur elektrostatisch am Werkstück haftet, sondern durch den Gelierungs- oder Anbackungsprozeß auch am Werkstück 10 anklebt (Fig. 1B). Anschließend wird das Werkstück einem Luftstrom ausgesetzt, der die Pulverpartikel außerhalb des begrenzten Oberflächenbereiches 14, die nur elektrostatisch am Werkstück haften, jedoch nicht am Werkstück kleben, von der Oberfläche des Werkstückes 10 abbläst. Die auf dem Werkstück verbleibende Farbpulverstruktur 14 entspricht daher dem auf das Werkstück 10 projizierten Infrarotbild 14 (Fig. 1C).

Zum Aufbringen eines zweifarbigen Musters wird daraufhin eine zweite Farbschicht 16 auf die Oberfläche des Werkstückes 10 aufgebracht, die gleichfalls elektrostatisch am Werkstück 10 haftet. Mit derselben Strahlungsquelle 20 wird der der zweiten Farbe entsprechende Oberflächenbereich 18 auf die Oberfläche des Werkstückes 10 projiziert, so daß das Farbpulver 16 in diesem Bereich geliert und am Werkstück anklebt. Anschließend werden die Farbpulverpartikel außerhalb des zweiten Oberflächenbereiches 18 abgeblasen, so daß nur das erste Farbpulver 12 im Bereich 14 und das zweite Farbpulver 16 im Bereich 18, die an der Oberfläche des Werkstückes kleben, auf dieser verbleiben (Fig. 1D bis 1F).

Bei dem erfindungsgemäßen Verfahren wird also mit einer geeigneten fokussierbaren Infrarot- oder Ultraviolett-Strahlungsquelle 20 nicht das gesamte, mit Farbpulver beschichtete Werkstück gleichmäßig bestrahlt, sondern es wird ein bestimmtes Muster innerhalb eines abgegrenzten Oberflächenbereiches 14, 18 auf das Werkstück projiziert, so daß dem Pulver in diesem Bereich Energie zugeführt wird, die einen Vernetzungsprozeß auslöst, das Pulver geliert und am Werkstück anklebt. Selbstverständlich können verschiedenste Arten von Strukturen in beliebig vielen Farben auf das Werkstück aufgebracht werden.

Wenn alle Farbschichten in der gewünschten Form auf das Werkstück aufgebracht sind, um ein gewünschtes Bild oder Muster auszubilden, wird das Werkstück mit dem angelierten Farbpulver in einem einzigen Arbeitsschritt in einem an sich bekannten Einbrennofen (nicht gezeigt) eingebrannt.

Als Strahlungsquellen zum Bestrahlen jeweils eines abgegrenzten Oberflächenbereiches des Pulvers, um Gelieren oder partielles Vernetzen des Pulvers zu bewirken, kommen solche Strahlungsquellen in Frage, deren Emissionswellenlänge an die Absorptionswellenlänge der verwendeten Pulver anpaßbar ist. Dies kann z.B. ein Nernststift mit einer geeigneten Optik oder ein Infrarotlaser sein, dessen Strahl zeilenweise über das Werkstück geführt wird.

Ein Infrarotlicht- oder UV-Lichtbild kann also insgesamt auf das Werkstück projiziert werden oder nach Art eines Scanners den gewünschten Oberflächenbereich des Werkstückes überstreichen. Wählt man als Infrarot-Strahlungsquelle beispielsweise einen Laserscanner mit einer geeigneten Ansteuerungsvorrichtung, so kann dieser mit einem Rechner gekoppelt werden, um digitalisierte Bilder direkt von dem Rechner auf das Werkstück zu übertragen.

Mit den heute bekannten Technologien für elektromagnetische Strahlungsquellen sowie mit den bekannten Farbpulvern ist vorgesehen, jeden zu beschichtenden Oberflächenbereich etwa während 5s auf ca. 160° zu erwärmen. Bei einer entsprechenden Weiterentwicklung dieser Technologien wird jedoch erwartet, daß auch eine kürzere Bestrahlung bei einer geringeren Temperatur ausreicht, um entsprechend geeignete Farbpulver zu gelieren, so daß diese am Werkstück ankleben.

Weitere Beschichtungsarten, bei denen das erfindungsgemäße Verfahren eingesetzt werden kann, sind unter anderem die Textilbeschichtung (Muster auf Stoffbahnen), die Holzbeschichtung und die Keramikbeschichtung (Fliessen, Dekor und Geschirr). Hierzu muß die Strahlungsquelle eine vollständige Vernetzung des Pulvers bewirken, so daß ein anschließendes Einbrennen in einem Ofen nicht mehr notwendig ist und die zu beschichtenden Werkstoffe nicht unnötig hohen Temperaturen ausgesetzt werden.

Mit dem erfindungsgemäßen Verfahren können auf relativ einfache und schnelle Weise verschiedenfarbige Muster ausgebildet werden. Insbesondere wird die Herstellung und Anwendung verschiedener Masken für jeweils verschiedene Muster überflüssig, da mit der Strahlungsquelle alle Arten von Formen und Strukturen auf das Werkstück projiziert bzw. "gescannt" werden können. Besonders vorteilhaft ist auch die Ausführungsform, bei der das Infrarotlicht- oder UV-Lichtbild mit einem rechnergesteuert Laserscanner auf das Werkstück aufgebracht wird, wodurch ein äußerst flexibles Beschichtungsverfahren geschaffen wird, das verschiedene Farben und Muster ohne aufwendige Umstellungsprozesse auf verschiedene Arten von Werkstücken aufbringen kann.

## Patentansprüche

1. Verfahren zum Pulverbeschichten von Werkstücken, bei dem ein Werkstück (10) zunächst mit Pulver (12) beschichtet wird, so daß das Pulver am Werkstück (10) haftet, das am Werkstück (10) haftende Pulver (12) nachfolgend innerhalb eines begrenzten Oberflächenbereichs (14) mit elektromagnetischer Strahlung bestrahlt wird, so daß das Pulver in diesem begrenzten Oberflächenbereich (14) geliert und am Werkstück (10) anklebt, und das außerhalb des begrenzten Oberflächenbereiches am Werkstück haftende Farbpulver nach der elektromagnetischen Bestrahlung entfernt wird, dadurch **gekennzeichnet**, daß die Emissionswellenlänge der elektromagnetischen Strahlung auf die Absorptionswellenlänge des verwendeten Pulvers (12, 16) abgestimmt wird, um einen Vernetzungsvorgang im Pulver auszulösen, und das Pulver (12) nach der elektromagnetischen Bestrahlung in einem Ofen eingebrannt wird.

2. Verfahren nach Anspruch 1, dadurch **gekennzeichnet**, daß das Werkstück (10) mit Infrarotlicht bestrahlt wird.

3. Verfahren nach Anspruch 1, dadurch **gekennzeichnet**, daß das Werkstück (10) mit Ultraviolettlicht bestrahlt wird.

4. Verfahren nach einem der vorangehenden Ansprüche, dadurch **gekennzeichnet**, daß das Werkstück (10) elektrostatisch mit Farbpulver (12) beschichtet wird und daß das außerhalb des begrenzten Oberflächenbereiches (14) am Werkstück haftende Farbpulver durch Abblasen entfernt wird.

5. Verfahren nach einem der vorangehenden Ansprüche, dadurch **gekennzeichnet**, daß zum Beschichten des Werkstückes mit verschiedenen Farbpulvern das Werkstück (10) nacheinander mit jeweils einem der Farbpulver (12) beschichtet und innerhalb eines der jeweiligen Farbe zugeordneten, begrenzten Oberflächenbereiches (14) bestrahlt wird, und daß das überschüssige Farbpulver außerhalb des zugeordneten Oberflächenbereiches abgeblasen wird, daß das Beschichten, Bestrahlen und Abblasen des Werkstückes für jede weitere Farbe (16, 18) wiederholt wird, und daß nach dem Aufbringen der verschiedenen Farbpulver (12, 16) auf das Werkstück (10) die Farbpulver in dem Ofen eingebrannt werden.

6. Verfahren nach einem der vorangehenden Ansprüche 2, 4 oder 5, dadurch **gekennzeichnet**, daß ein IR-Laser (20) zum Ausgeben des Infrarotlichtes verwendet wird, der den begrenzten Oberflächenbereich (14, 18) des Werkstückes überstreicht.

7. Verfahren nach einem der Ansprüche 2, 4 oder 5, dadurch **gekennzeichnet**, daß ein fokussierbarer Nernststift (20) mit einer geeigneten Optik zum Ausgeben des Infrarotlichtes verwendet wird, der einen auf den begrenzten Oberflächenbereich (14, 18) des Werkstückes (10) gerichteten Energiestrom abgibt.

8. Verfahren nach einem der vorangehenden Ansprüche 3 bis 5, dadurch **gekennzeichnet**, daß eine UV-Strahlungsquelle (20) zum Ausgeben des Ultraviolettlichtes verwendet wird, die einen auf den begrenzten Oberflächenbereich (14, 18) des Werkstückes (10) gerichteten Energiestrom abgibt.

9. Verfahren nach Anspruch 6, dadurch **gekennzeichnet**, daß der IR-Laser (20) mit einem Rechner gekoppelt wird, um ein digitalisiertes Muster direkt auf die Oberfläche des Werkstückes (10) zu übertragen.

10. Verfahren nach einem der vorangehenden Ansprüche, dadurch **gekennzeichnet**, daß das am Werkstück (10) haftende Pulver (12, 16) bei der Bestrahlung während etwa 2 bis 5 Sekunden auf maximal etwa 160°C erwärmt wird.

11. Verfahren nach einem der Ansprüche 1 bis 7, dadurch **gekennzeichnet**, daß das am Werkstück (10) haftende Pulver (12, 16) bei der Bestrahlung während etwa 5 Sekunden auf etwa 160°C erwärmt wird.

## Claims

1. A process of powder coating of workpieces, in which initially a workpiece (10) is coated with powder (12), so that the powder adheres to the workpiece (10), and the powder (12) adhering to the workpiece (10) is subsequently irradiated with electromagnetic radiation within a defined surface portion (14), so that the powder within said defined surface portion (14) will gelate and stick to the workpiece (10), and the colour powder which adheres to the workpiece outside the defined surface portion is removed after the electromagnetic irradiation, characterised in that the emission wavelength of the electromagnetic radiation is matched with the absorption wavelength of the used powder (12, 16) so as to initiate a crosslinking in the powder (12) after the electromagnetic irradiation in an oven.

2. The process as claimed in claim 1, characterised in that the workpiece (10) is irradiated with infrared light.

3. The process as claimed in claim 1, characterised in that the workpiece (10) is irradiated with ultraviolet light.

4. The process as claimed in any of the preceding claims, characterised in that the workpiece (10) is electrostatically coated with colour powder (12) and that the colour powder adhering to the workpiece outside of said defined surface area (14) is removed by blowing.

5. The process as claimed in any of the preceding claims, characterised in that for coating the workpiece with different colour powders said workpiece (10) is successively coated with a respective one of said colour powders (12) and is irradiated within a respective defined surface portion (14) allotted to the respective colour, and that excessive colour powder outside of the respective allotted surface portion is blown off, that the coating, irradiating and blowing operations on the workpiece are repeated for every additional colour (16, 18), and that upon completion of the application of the various colour powders (12, 16) to the workpiece (10) the colour powders are baked in said oven.

6. The process as claimed in any of the preceding claims 2, 4 or 5, characterised in that an IR-laser (20) is used to emit the infrared light, and scans the defined surface portion 814, 18) of the workpiece.

7. The process as claimed in any of claims 2, 4 or 5, characterised in that a focused Nernst stylus (20) including a suitable optical system is used to emit said infrared light, said Nernst stylus emitting a flow of energy directed to said defined surface portion (14, 18) of the workpiece (10).

8. The process as claimed in any of the preceding claims 3 to 5, characterised in that an UV-radiation source (20) is used to emit said ultraviolet light and emits a flow of energy directed to said defined surface portion (14, 18) of the workpiece (10).

9. The process as claimed in claim 6, characterised in that the IR-laser (20) is coupled to a computer so as to transfer a digitised pattern directly onto the surface of the workpiece (10).

10. The process as claimed in any of the preceding claims, characterised in that the powder (12, 16) adhering to the workpiece (10) is heated upon irradiation for about 2 to 5 seconds at a maximum of about 160°C.

11. The process as claimed in any of claims 1 to 7, characterised in that the powder (12, 16) adhering to the workpiece (10) is heated upon irradiation for about 5 seconds at about 160°C.

## Revendications

1. Procédé pour revêtir des pièces usinées avec des poudres, dans lequel une pièce usinée (10) est d'abord revêtue d'une poudre (12), de manière que la poudre (12) adhère sur la pièce usinée (10), la poudre (12) adhérant à la pièce usinée (10) étant subséquemment irradiée avec un rayonnement électromagnétique, dans les limites d'une zone de surface (14) limitée, de manière que la poudre se gélifie dans cette zone de surface (14) limitée et adhère par collage sur la pièce usinée (10), et la poudre colorée, adhérant sur la pièce usinée, hors de la zone de surface limitée, étant enlevée après l'irradiation au rayonnement électromagnétique, caractérisé en ce que la longueur d'ondes d'émission du rayonnement électromagnétique est en accord avec la longueur d'ondes d'absorption de la poudre (12, 16) utilisée, pour déclencher dans la poudre un processus de réticulation, et la poudre (12) étant ensuite cuite dans la masse, dans un four, après l'irradiation électromagnétique.

2. Procédé selon la revendication 1, caractérisé en ce que la pièce usinée (10) est irradiée avec une lumière infrarouge.

3. Procédé selon la revendication 1, caractérisé en ce que la pièce usinée (10) est irradiée avec une lumière ultraviolet.

4. Procédé selon l'une des revendications précédentes, caractérisé en ce que la pièce usinée (10) est revêtue par voie électrostatique avec une poudre colorée (12) et en ce que la poudre colorée, adhérant sur la pièce usinée, hors de la zone de surface (14) limitée, est enlevée par un soufflage.

5. Procédé selon l'une des revendications précédentes, caractérisé en ce que, pour revêtir la pièce usinée avec différentes poudres colorées, la pièce usinée (10) est revêtue successivement chaque fois avec l'une des poudres colorées (12) et est irradiée dans les limites d'une zone de surface (14) limitée, associée à la teinte respective, et en ce que l'excès de poudre colorée se trouvant hors de la zone de surface associée est expulsé par soufflage, en ce que le revêtement, l'irradiation et le nettoyage par soufflage de la pièce usinée sont répétés pour chaque autre couleur (16, 18), et en ce qu'après application des différentes poudres colorées (12, 16) sur la pièce usinée (10), la poudre colorée est cuite dans la masse, dans le four.

6. Procédé selon l'une des revendications 2, 4 ou 5 précédentes, caractérisé en ce que l'on utilise un laser IR (20) pour émettre la lumière infrarouge, laser balayant la zone de surface (14, 18) limitée de la pièce usinée.

7. Procédé selon l'une des revendications 2, 4 ou 5, caractérisé en ce qu'une tige de Nernst (20) focalisable, ayant une optique appropriée, est utilisée pour émettre la lumière infrarouge, tige émettant un flux énergétique orienté sur la zone de surface (14, 18) limitée de la pièce usinée (10).

8. Procédé selon l'une des revendications 3 à 5 précédentes, caractérisé en ce que, pour émettre la lumière ultraviolet, est utilisée une source de rayonnement U.V. (20), qui émet un flux énergétique orienté sur la zone de surface (14, 18) limitée de la pièce usinée (10).

9. Procédé selon la revendication 6, caractérisé en ce que le laser IR (20) est couplé à un ordinateur afin de transmettre directement un motif numérisé à la surface de la pièce usinée (10).

10. Procédé selon l'une des revendications précédentes, caractérisé en ce que la poudre (12, 16) adhérant sur la pièce usinée (10) est chauffée lors de l'irradiation, pendant une durée d'environ 2 à 5 secondes, à une température maximale d'environ 160 °C.

11. Procédé selon l'une des revendications 1 à 7, caractérisé en ce que la poudre (12, 16) adhérant sur la pièce usinée (10) est chauffée pendant l'irradiation, pendant une durée d'environ 5 secondes, à une température d'environ 160°C.
